# EUROPEAN PATENT APPLICATION

(11) **EP 4 450 210 A1**
(43) Date of publication of application: **23.10.2024**
(21) Application number: 23876821.2
(22) Date of filing: 13.10.2023
(51) Int. Cl.: B23K 26/21

(54) **HIGH-STRENGTH STEEL LASER WELDING FILLER, JOINT AND METHOD**

(30) Priority: 14.10.2022 CN 202211262308
(71) Applicant: Shanghai Institute of Optics and Fine Mechanics Chinese Academy of Sciences, Shanghai 201800 (CN)
(72) Inventor: YANG, Shanglu, Shanghai 201800 (CN); TAO, Wu, Shanghai 201800 (CN); XU, Wei, Shanghai 201800 (CN); ZHANG, Jiazhi, Shanghai 201800 (CN)
(74) Representative: Louis Pöhlau Lohrentz
(86) International application number: PCT/CN2023/124537
(87) International publication number: WO 2024/078622

(57) **Abstract**

A high-strength steel laser welding filler, comprising the following components in percentages by weight: 0.05-0.5% of C, 0.1-2% of Cu, 0.2-2.5% of Cr, 0.5-3.5% of Mo, and 2-10% of Ni, with the balance being Fe and inevitable impurities. The filler is used for laser filler welding of hot-formed steel which has an aluminium-containing coating on the surface thereof, can effectively reduce the adverse effect of the aluminium-containing coating on the surface on the strength of a joint, and enables the strength and plasticity of the welded joint, after hot stamping, to reach 90% or more of those of a base material.

## Description

### Technical Field

The present invention belongs to the field of laser welding, and in particular relates to a high-strength steel laser welding filler, a high-strength steel laser welded joint, and a high-strength steel laser welding method.

### Background Art

Hot-formed high-strength steel is a structural material commonly used in motor vehicle manufacturing. It generally has a high strength of more than 1,500 MPa and is suitable for the processing and manufacturing of important structural parts such as A-pillars and main longitudinal beams. In the hot forming process of hot-formed high-strength steel, a workpiece generally needs to be heated to 880°C-950°C and held for 3-6 min (the heating temperature and holding time vary depending on the size and thickness of the workpiece), and then quenched. In order to avoid surface oxidation of steel at a high temperature during the process, it is usually necessary to apply an aluminium-based coating to isolate the steel from being in contact with the air, such as hot-formed steel coated with an aluminium-silicon coating. However, during the welding, the aluminium element in the coating easily intrudes into the welded structure to form a brittle phase and ferrite structure, thus affecting the properties of the joint.

To solve this problem, it is usually necessary to pre-polish the periphery of the welded zone of the hot-formed high-strength steel in actual production to remove the aluminium-based coating, which involves additional processing costs. Alternatively, a material with a high proportion of alloy components, such as Mn, Cr and Ni, is used as a filler to inhibit the formation of an Al-containing brittle phase. However, the negative effects such as segregation caused by excessive alloy components will also lead to a reduction in the mechanical properties of the joint. These unfavourable factors restrict the application of hot-formed high-strength steel.

### Summary of the Invention

An object of the present invention is to provide a high-strength steel laser welding filler to improve the strength and toughness of a high-strength steel laser welded joint with an aluminium-containing coating. The present invention further provides a high-strength steel laser welded joint and a high-strength steel laser welding method.

According to an example in an aspect of the present invention, a high-strength steel laser welding filler is provided, which comprises Fe as a base material and the following components in percentages by weight: 0.05-0.5% of C, 0.1-2% of Cu, 0.2-2.5% of Cr, 0.5-3.5% of Mo, 2-10% of Ni, and inevitable impurities.

Al is a ferrite stabilizing element, which easily leads to residual low-hardness ferrite in the solidified welding seam structure. Meanwhile, the Al element itself is likely to aggregate, thus forming a brittle intermetallic compound in the welding seam structure. These factors collectively lead to a reduction in the strength of a high-strength steel welded joint with a pure aluminium or aluminium-based coating. For The existing welding fillers, the filler itself is usually used to dilute the Al element entering the welding seam to reduce the negative effect of the Al element on the strength of the joint. However, the effect is limited, and the strength and plasticity of the welded joint obtained under some working conditions are even less than 70% of those of the parent material. Through much research and testing, the inventors have controlled the alloy components within a welding filler in a reasonable range. In this way, the austenite structure can be effectively stabilised and the formation of ferrite can be inhibited during solidification on the one hand, and the alloy components in the filler can be uniformly distributed in the welding seam structure to achieve an effect of improving the strength of the welding seam on the other hand. As a result, the final joint obtained after hot stamping will have strength and plasticity reaching 90% or more of the properties of the parent material after hot stamping.

Further, the welding filler further comprises 1.0-5.0% of Mn and 0.5-3.0% of Si. An excessively high content of C in the welding seam leads to the hardening of the structure, the formation of cracks, and thus the reduction of joint toughness. The addition of the Mn element can partially replace the function of C and reduce the C content in the filler. Si can improve the flowability of the filler during filling and promote the uniform distribution thereof.

Further, the welding filler further comprises 0.1-1% of Ti. The addition of Ti is conducive to the refinement of the welding seam structure and the solidification of a part of the C element and has a pinning effect, which further improves the strength and toughness of the joint.

In an optional example, the filler comprises, in percentages by weight, 0.05-0.2% of C, 0.1-0.7% of Cu, 0.2-1% of Cr, 0.5-1.5% of Mo, and 2.0-4.5% of Ni. Such a formulation is suitable for welding a parent material with a strength of ≤ 1,600 MPa.

In an optional example, the filler comprises, in percentages by weight, 0.2-0.35% of C, 0.7-1.3% of Cu, 1.0-1.8% of Cr, 1.5-2.5% of Mo, and 4.5-7% of Ni. Such a formulation is suitable for welding a parent material with a strength of ≤ 1,900 MPa.

In an optional example, the filler comprises, in percentages by weight, 0.35-0.5% of C, 1.3-2.0% of Cu, 1.8-2.5% of Cr, 2.5-3.5% of Mo, and 7-10% of Ni. Such a formulation is suitable for welding a parent material with a strength of ≤ 2,200 MPa.

According to another aspect of the examples of the present invention, a high-strength steel laser welded joint is provided, which is formed by welding a hot-formed steel plate which has a pure aluminium or aluminium-based coating on at least one surface by means of laser filler welding. Here, the welded joint is welded with any preceding laser welding filler, and the solidified structure of the welding seam after laser filler welding comprises, in percentages by weight, 0.02-0.25% of Cu, 0.1-1.2% of Cr, 0.1-1.2% of Mo, 0.4-3% of Ni, 0.3-0.8% of Si, and 0.8-1.8% of Mn in any zone. The welding seam zone of the joint has a uniform structure. analysis using an electron microscope or X-ray diffraction, has shown that the solidified structure has good uniformity throughout, without local ferrite formation or a brittle phase formed due to element segregation.

Further, the content of elements in any zone of the solidified structure of the high-strength steel laser welded joint satisfies, in percentages by weight, 2% ≤ Cu + Cr + Mo + Ni + Si + Mn ≤ 6%. An excessively low content of alloy components in the solidified structure of the joint will lead to insufficient strength, while an excessively high content of alloy components will easily lead to segregation, which will also have an adverse effect on the strength.

According to another aspect of the examples of the present invention, a high-strength steel laser welding method is provided, the method comprising welding a hot-formed steel plate which has a pure aluminium or aluminium-based coating on at least one surface by means of laser filler welding, wherein the parent material of the hot-formed steel after hot stamping has a strength of ≤ 1,600 MPa, and is welded using a filler comprising, in percentages by weight, 0.05-0.2% of C, 0.1-0.7% of Cu, 0.2-1% of Cr, 0.5-1.5% of Mo, and 2.0-4.5% of Ni. After hot stamping, both the strength and the plasticity of the welded joint provided by the welding method reach 90% or more of those of the parent material.

According to another aspect of the examples of the present invention, a high-strength steel laser welding method is provided, the method comprising welding a hot-formed steel plate which has a pure aluminium or aluminium-based coating on at least one surface by means of laser filler welding, wherein the parent material of the hot-formed steel after hot stamping has a strength of 1600 MPa-1900 MPa, and is welded using a filler comprising, in percentages by weight, 0.2-0.35% of C, 0.7-1.3% of Cu, 1.0-1.8% of Cr, 1.5-2.5% of Mo, and 4.5-7% of Ni. After hot stamping, both the strength and the plasticity of the welded joint provided by the welding method reach 90% or more of those of the parent material.

According to another aspect of the examples of the present invention, a high-strength steel laser welding method is provided, the method comprising welding a hot-formed steel plate which has a pure aluminium or aluminium-based coating on at least one surface by means of laser filler welding, wherein the parent material of the hot-formed steel after hot stamping has a strength of 1900 MPa-2200 MPa, and is welded using a filler comprising, in percentages by weight, 0.35-0.5% of C, 1.3-2.0% of Cu, 1.8-2.5% of Cr, 2.5-3.5% of Mo, and 7-10% of Ni. After hot stamping, both the strength and the plasticity of the welded joint provided by the welding method reach 90% or more of those of the parent material.

### Brief Description of the Drawings

Fig. 1 is an image showing the distribution of Cr element in a cross-section through a welding seam under an electron microscope in an example;
Fig. 2 is an image showing the distribution of Ni element in a cross-section through a welding seam under an electron microscope in an example;
Fig. 3 is a diagram showing the phase composition in a welding seam zone at different temperatures in an example;
Fig. 4 is an image showing the distribution of Cr element in a cross-section through a welding seam under an electron microscope in a comparative example;
Fig. 5 is an image showing the distribution of Ni element in a cross-section through a welding seam under an electron microscope in a comparative example;
Fig. 6 is a diagram showing the phase composition in a welding seam zone at different temperatures in a comparative example;
Fig. 7a shows the result of a tensile test on a welded joint in an example; and
Fig. 7b shows the result of a tensile test on a welded joint in another comparative example.

The purpose of the aforementioned drawings is to illustrate the present invention in detail, thus enabling those skilled in the art to understand the technical concepts of the present invention, rather than limiting the present invention.

### Detailed Description of Embodiments

The present invention is further described below in details through specific examples in view of the accompanying drawings.

Reference to "an example" herein means that a specific feature, structure or characteristic described in view of the example can be incorporated in at least one example herein. The phrases appearing at various places in the specification do not necessarily refer to the same example, nor are they limited to mutually exclusive independent or alternative examples. Those skilled in the art should be able to understand that the examples herein may be combined with other examples without structural conflict.

For the processing of hot-formed steel parts, a parent material needs to be heated to 880°C-950°C and held for 3-6 min, and then formed in a mould, followed by rapid cooling to ensure that the matrix can form a structure entirely composed of martensite, thus increasing the strength thereof from 500 MPa to 1,500 MPa or even higher, with an elongation of 5% or more. When a hot-formed steel is used as a high-strength structural material for production and manufacturing, the parent material that has not been hot stamped is first subjected to processing, such as cutting and welding, for preliminary forming, followed by hot stamping to obtain a finished workpiece with a structure meeting application requirements. However, during welding, the aluminium-containing coating on the surface of the hot-formed steel will enter the welding seam structure and mix with the molten hot-formed steel, such that the solidified welding seam structure of the joint after hot stamping is no longer purely composed of martensite, but usually comprises components with relatively low strength or plasticity, such as ferrite and an intermetallic compound. This severely weakens the strength and plasticity of the welded joint and leads to the mechanical properties of the welded joint zone being even less than 70% of those of the parent material. At the time of failure, fracture usually occurs in the welding seam zone, thus often failing to meet design requirements and restricting the application of hot-formed steel in the industrial field.

In order to solve the aforementioned problems, an example in an aspect of the present invention provides a laser welding filler. The components of the filler, the strength of a parent material for welding, and the welding parameters are as shown in Table 1, wherein the parent material is coated with an aluminium-silicon coating on the surface thereof. A parent material for welding with a higher strength indicates a welding filler with a higher percentage of alloy components to be used. On the one hand, the alloy components in the filler can stabilise the austenite in the welding seam structure to counteract the tendency for ferritization caused by the Al element. On the other hand, the strength and toughness are improved by increasing the alloying degree of the welding seam structure, and the segregation of a single element is avoided by reasonably controlling the content of different elements. Moreover, Cu can be used to replace Ni to some extent, and Mo can be used to replace Cr to some extent, so as to achieve the effect of improving the mechanical properties of a joint. This is because high contents of Ni and Cr are both likely to segregate in the solidified welding seam structure, causing a decline in mechanical properties. Additionally, Cr will further bond to C to generate harmful carbides, causing local carbon deficiency and reducing the overall strength of the welding seam structure. To further improve the strength of a joint, the inevitable impurities in a filler, especially S and P, should be further controlled to be S ≤ 0.01% and P ≤ 0.03%, in percentages by weight. According to the components provided in Table 1, different raw materials are melted and mixed to prepare a welding wire with a diameter of 0.8 mm-1.6 mm for welding. Then, the weldment is hot-stamped to prepare a tensile specimen, and in a uniaxial tensile test, the resulting joint tensile specimen exhibits a strength and plasticity reaching 90% or more of the mechanical properties of the parent material after hot stamping. Taking a welding wire with a diameter of 1.0 mm as an example, the relationship between the welding speed and the wire feeding speed is as follows: for a plate having a thickness of 1.0 mm, the welding speed is 2.5-3.0 times the wire feeding speed; for a plate having a thickness of 1.5 mm, the welding speed is 1.5-2.0 times the wire feeding speed; and for a plate having a thickness of 2.0 mm, the welding speed is 0.8-1.3 times the wire feeding speed. At the same wire feeding speed, if the plate is thicker, the welding speed will be lower to increase the filling volume. The fillers provided in Table 1 have a hardness comparable to that of the parent material, and thus the hardness, strength and plasticity of the welding seam structure after the overall hot stamping are close to those of the parent material. A filler suitable for a high-strength parent material can also be used for welding a parent material with lower strength, but the plasticity of the welding seam structure will decrease after hot stamping. However, when a filler for a low-strength parent material is used for welding a parent material with higher strength, the resulting joint will have reduced mechanical properties.

| Element of Alloy | Ranges of component (wt%) | | |
|---|---|---|---|
| C | 0.05-0.2 | 0.2-0.35 | 0.35-0.5 |
| Cu | 0.1-0.7 | 0.7-1.3 | 1.3-2.0 |
| Cr | 0.2-1.0 | 1.0-1.8 | 1.8-2.5 |
| Mo | 0.5-1.5 | 1.5-2.5 | 2.5-3.5 |
| Ni | 2.0-4.5 | 4.5-7.0 | 7.0-10.0 |
| Fe | Balance | Balance | Balance |
| Strength of parent material | ≤ 1,600 MPa | 1,600 MPa-1,900 MPa | 1,900 MPa-2,200 MPa |

| | | | |
|---|---|---|---|
| Table 1 Components of welding filler and content range thereof | | | |

In a preferred example, the filler further comprises, in percentages by weight, 0.5-3% of Si, and 1.0-5.0% of Mn. Si can improve the flowability of the filler to facilitate the full flow of the filler during welding, thereby allowing the fully uniform diffusion of alloy components and preventing aggregation of the Al-containing coating. The addition of Mn can reduce the amount of C, and thus less harmful carbides will be generated. In an example, a steel plate which has an aluminium-silicon coating and a strength level of 1,500 MPa after hot stamping is used as a parent material, and a welding wire comprising, in percentages by weight, 0.1% of C, 0.2% of Cu, 0.5% of Cr, 1.0% of Mo, and 4.0% of Ni is used as a filler to carry out laser filler welding, followed by hot stamping to obtain a joint sample with a tensile strength of about 1,360 MPa. In a preferred example, the addition of 0.8% of Si and 1.5% of Mn in a welding wire can results in the increase of the tensile strength of the sample to 1,400 MPa or more. In another preferred example, a steel plate which has an aluminium-silicon coating and a strength level of 2,000 MPa after hot stamping is used as a parent material, a welding wire comprising, in percentages by weight, 0.35% of C, 1.0% of Cu, 1.2% of Cr, 3.0% of Mo, 9.0% of Ni, 1.2% of Si, and 2.4% of Mn is used as a filler to carry out laser filler welding, followed by hot stamping to obtain a joint sample with a tensile strength above 1,900 MPa.

In a further preferred example, the filler further comprises, in percentages by weight, 0.1-1% of Ti. The addition of Ti can promote the grain refinement of the solidified structure, and meanwhile, the bonding of Ti to a part of C can have a pinning effect, thereby further improving the mechanical properties of the joint. In an example, a steel plate which has an aluminium-silicon coating and a strength level of 1,900 MPa after hot stamping is used as a parent material, and a welding wire comprising, in percentages by weight, 0.25% of C, 0.5% of Cu, 1.0% of Cr, 2.0% of Mo, 7.0% of Ni, 1.2% of Si, and 1.8% of Mn is used as a filler to carry out laser filler welding, followed by hot stamping to obtain a joint sample with a tensile strength of 1,720 MPa. In a further preferred example, the addition of 0.5% of Ti into a welding wire results in the increase of the tensile strength of the sample to 1,800 MPa or more.

An example in another aspect of the present invention further provides a high-strength steel laser welded joint, which is formed by subjecting a hot-formed steel plate which has a pure aluminium or aluminium-based coating on at least one surface to laser filler welding, using a high-strength steel laser welding filler according to any one of the preceding examples.

In an example, hot-formed steel which has an aluminium-silicon coating on the surface thereof and a tensile strength of 1,500 MPa or less after hot stamping is used as a parent material, and a welding wire comprising, in percentages by weight, 0.1% of C, 0.5% of Cu, 0.5% of Cr, 1.0% of Mo, 4.0% of Ni, 0.8% of Si, and 1.5% of Mn, with the balance being Fe, is used to carry out laser tailor welding, and the tailor-welded plate is hot-stamped. After sampling for testing, it shows that the tailor-welded joint has a tensile strength that is 90% or more of that of the parent material. The elements of the solidified welding seam structure comprising the aluminium-silicon coating, hot-formed steel matrix, and filler wire, which are melted and mixed during laser tailor welding, are detected under a scanning electron microscope. The solidified welding seam structure comprises the following elements: in percentages by weight, 0.07% of Cu, 0.21% of Cr, 0.14% of Mo, 0.54% of Ni, 0.54% of Si, and 1.11% of Mn, with the sum of the contents of the above elements being 2.87%.

In another example, hot-formed steel which has an aluminium-silicon coating on the surface thereof and a tensile strength level of 1,900 MPa after hot stamping is used as a parent material, and a welding wire comprising, in percentages by weight, 0.25% of C, 1.0% of Cu, 1.5% of Cr, 2.0% of Mo, 6.0% of Ni, 1.2% of Si, and 2.0% of Mn, with the balance being Fe, is used to carry out laser tailor welding, and the tailor-welded plate is hot-stamped. After sampling for testing, it shows that the tailor-welded joint has a tensile strength that is 90% or more of that of the parent material. The elements of the solidified structure comprising the aluminium-silicon coating, hot-formed steel matrix, and filler wire, which are melted and mixed during laser tailor welding, are detected under a scanning electron microscope. The solidified structure comprises the following elements: in percentages by weight, 0.14% of Cu, 0.38% of Cr, 0.27% of Mo, 0.82% of Ni, 0.60% of Si, and 1.57% of Mn, with the sum of the contents of the above elements being 4.06%.

In a further example, hot-formed steel which has an aluminium-silicon coating on the surface thereof and a tensile strength level of 2,200 MPa after hot stamping is used as a parent material, and a welding wire comprising, in percentages by weight, 0.38% of C, 1.5% of Cu, 2.0% of Cr, 3.0% of Mo, 9.0% of Ni, 1.5% of Si, and 3.0% of Mn, with the balance being Fe, is used to carry out laser tailor welding, and the tailor-welded plate is hot-stamped. After sampling for testing, it shows that the tailor-welded joint has a tensile strength that is 90% or more of that of the parent material. The elements of the solidified zone comprising the aluminium-silicon coating, hot-formed steel matrix, and filler wire, which are melted and mixed during laser tailor welding, are detected. The solidified zone comprises the following elements: in percentages by weight, 0.2% of Cu, 1.11% of Cr, 0.41% of Mo, 1.22 of Ni, 0.62% of Si, and 1.66% of Mn, with the sum of the contents of the above elements being 5.61%.

In a comparative example, a welding wire comprising, in percentages by weight, not more than 0.3% of C, not more than 1.3% of Si, 0.5-7% of Mn, 5-22% of Cr, 6-20% of Ni, and not more than 0.4% of Mo is used as a filler to carry out laser filler welding, and the obtained joint has a tensile strength of less than 1,200 MPa.

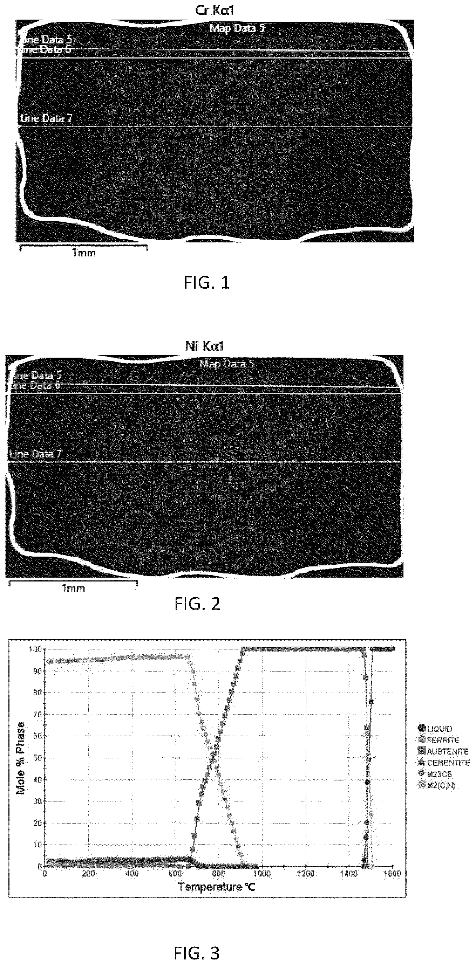

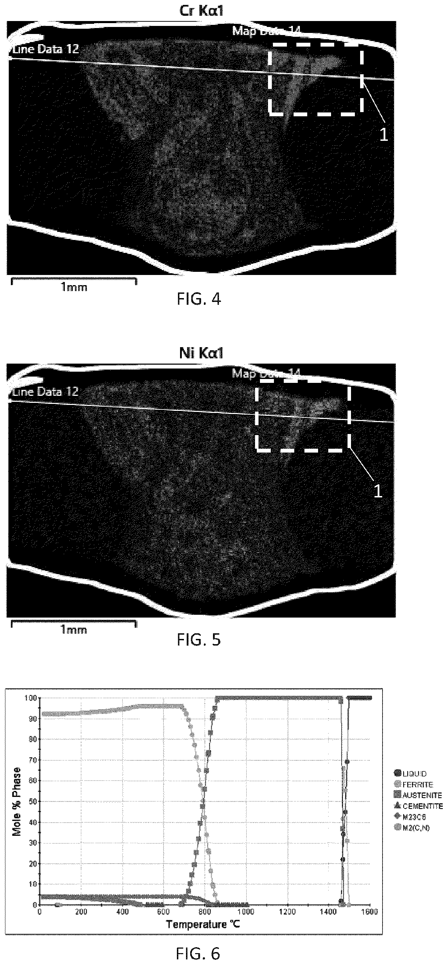

Energy spectrum analysis (Map Data5) is performed on the cross-section through a welded joint in an example, and the distribution of Cr and Ni is as shown in Fig. 1 and Fig. 2, respectively. The red colour in Fig. 1 represents the distribution of the Cr element, and the green colour in Fig. 2 represents the distribution of the Ni element. It can be seen that Cr and Ni are uniformly distributed in the welding seam zone, and the contents thereof are higher than those in the parent material. Line scanning is carried out in Line Data5, Line Data6 and Line Data7 zones, respectively, and the results also show that the Cr element and Ni element are uniformly distributed in the welding seam zone. These alloy components can effectively perform a strengthening effect, such that the joint exhibits higher strength and plasticity. Energy spectrum analysis (Map Data14) is performed on the cross-section of a welded joint in a comparative example mentioned above, and the distribution of Cr and Ni is as shown in Fig. 3 and Fig. 4, respectively. Likewise, the red colour in Fig. 3 represents the distribution of the Cr element, and the green colour in Fig. 4 represents the distribution of the Ni element. It can be seen that relatively clear boundaries are formed between the zones where the elements Cr and Ni are enriched and the welding seam zone and the parent material, and significant segregation of both Cr and Ni occurs in zone 1, that is the edge zone of the welding seam surface. The results from the line scanning of Line Data12 further shows that the segregation of the elements Cr and Ni occurs not only in zone 1 but also in other sites in the welding seam, which leads to insufficient overall mechanical properties of the joint. The phase compositional simulation calculation is performed on the example and the comparative example, respectively, and the results are as shown in Fig. 3 and Fig. 6, where the horizontal axis is temperature, and the vertical axis is the mole percentage of different phases in an equilibrium state. It can be seen that the Fe element in the welding seam structure is mainly in the liquid phase at 1,400°C or higher, and is present mainly in the form of austenite, ferrite, and cementite after being solidified. During hot stamping, within the hot stamping temperature range, the overall structure is mainly austenite. If the welding seam structure is slowly cooled in an equilibrium process, it will transform into a ferrite-based structure at room temperature, which shows insufficient strength. Therefore, quenching is required for rapid cooling of the welding seam structure to retain the austenite structure. Additionally, the presence of the elements Cr and Ni helps to enhance the stability of austenite. Meanwhile, some of the alloy elements in the welding seam structure will precipitate in the form of M₂₃C₆, M₂(C,N), etc. When the content of the alloy elements, such as Cr, is too high, the alloy elements are likely to bond to the C element and precipitate in the form of M₂₃C₆ carbide; moreover, when large amounts of such carbides are present in the welding seam, it will cause the occurrence of local carbon deficiency and softening of the welding seam structure, thus adversely affecting the strength and toughness of the joint. By comparing Fig. 3 with Fig. 6, it can be seen that the content of M₂₃C₆ carbide in the welding seam structure of the example (Fig. 3) is significantly lower than that of the comparative example (Fig. 6). In view of the enrichment of the Cr element in zone 1 in Fig. 4, it can be understood that excessive M₂₃C₆ carbide is generated in zone 1, which then becomes a weak area of the welded joint. Moreover, such segregation not only occurs in zone 1, but may also occur in any zone in the welding seam structure. It can be seen that an excessively high content of alloy components has an adverse effect on the strength of the joint after hot stamping. The inventors designed the components of the welding wire through calculation and analysis. The contents of the Cr element and Ni element are controlled on the basis of maintaining the stabilizing effect thereof on austenite, such that the adverse effects of M₂₃C₆ carbide on the welded joint are eliminated, thereby achieving the purpose of improving strength, toughness, and elongation of the joint.

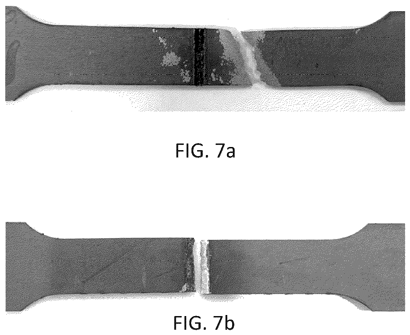

In yet another example, a hot-formed steel that has an aluminium-silicon coating on the surface thereof and a tensile strength of 1,500 MPa or less after hot stamping is used as a parent material, and a welding wire comprising, in percentages by weight, 0.05-0.1% of C, 0.2-0.5% of Cu, 0.4-0.8% of Cr, 0.5-1.0% of Mo, and 2.0-4.5% of Ni is used as a filler to carry out laser filler welding, and the resulting joint is hot-stamped to prepare a standard tensile specimen for tensile test. The result in Fig. 7a shows that the joint has a strength of more than 1,400 MPa, and the final fracture occurs in the parent material zone. In another comparative example, a welding wire comprising 0.1-0.4% of C, 0.5-0.2% of Si, 1-2.5% of Mn, 1.0-4.0% of Ni, and 0.5-2% of Mo + Cr is used as a filler to carry out laser filler welding, and the resulting joint is hot-stamped to prepare a standard tensile specimen for tensile test. The result in Fig. 7b shows that the fracture occurs in the welding seam zone. It can be seen that an excessively low percentage of alloy components in the welding filler will also have an adverse effect on the mechanical properties of the welded joint after hot stamping, reducing the strength and plasticity of the joint.

The purpose of the aforementioned examples is to provide a further detailed description of the present invention in view of the accompanying drawings, thus enabling those skilled in the art to understand the technical concepts of the present invention. Within the scope of claims of the present invention, optimization or equivalent replacement of the components or methods involved, as well as combinations of implementation methods in different examples without any conflict of principles, all fall within the protection scope of the present invention.

## Claims

1. A high-strength steel laser welding filler, **characterised by** comprising Fe as a base material and the following components in percentages by weight:
0.05-0.5% of C, 0.1-2% of Cu, 0.2-2.5% of Cr, 0.5-3.5% of Mo, 2-10% of Ni, and inevitable impurities.

2. The high-strength steel laser welding filler according to claim 1, **characterised by** further comprising 1.0-5.0% of Mn, and 0.5-3.0% of Si.

3. The high-strength steel laser welding filler according to claim 2, **characterised by** further comprising 0.1-1% of Ti.

4. The high-strength steel laser welding filler according to any one of claims 1 to 3, **characterised by** comprising, in percentages by weight, 0.05-0.2% of C, 0.1-0.7% of Cu, 0.2-1% of Cr, 0.5-1.5% of Mo, and 2.0-4.5% of Ni.

5. The high-strength steel laser welding filler according to any one of claims 1 to 3, **characterised by** comprising, in percentages by weight, 0.2-0.35% of C, 0.7-1.3% of Cu, 1.0-1.8% of Cr, 1.5-2.5% of Mo, and 4.5-7% of Ni.

6. The high-strength steel laser welding filler according to any one of claims 1 to 3, **characterised by** comprising, in percentages by weight, 0.35-0.5% of C, 1.3-2.0% of Cu, 1.8-2.5% of Cr, 2.5-3.5% of Mo, and 7-10% of Ni.

7. A high-strength steel laser welded joint formed by welding a hot-formed steel plate which has a pure aluminium or aluminium-based coating on at least one surface by means of laser filler welding, **characterised in that** a high-strength steel laser welding filler according to any one of claims 1 to 6 is used, and the solidified structure of a welding seam formed by means of laser filler welding comprises, in percentages by weight, 0.02-0.25% of Cu, 0.1-1.2% of Cr, 0.1-1.2% of Mo, 0.4-3% of Ni, 0.3-0.8% of Si, and 0.8-1.8% of Mn in any zone.

8. The high-strength steel laser welded joint according to claim 7, **characterised in that** the content of the elements in any zone of the solidified structure of the welding seam satisfies, in percentages by weight, 2% ≤ Cu + Cr + Mo + Ni + Si + Mn ≤ 6%.

9. A high-strength steel laser welding method, comprising welding a hot-formed steel plate which has a pure aluminium or aluminium-based coating on at least one surface by means of laser filler welding, **characterised in that** the parent material of the hot-formed steel after hot stamping has a strength of ≤ 1,600 MPa, and is welded using a high-strength steel laser welding filler according to claim 4.

10. A high-strength steel laser welding method, comprising welding a hot-formed steel plate which has a pure aluminium or aluminium-based coating on at least one surface by means of laser filler welding, **characterised in that** the parent material of the hot-formed steel after hot stamping has a strength of 1600 MPa-1900 MPa, and is welded using a high-strength steel laser welding filler according to claim 5.

11. A high-strength steel laser welding method, comprising welding a hot-formed steel plate which has a pure aluminium or aluminium-based coating on at least one surface by means of laser filler welding, **characterised in that** the parent material of the hot-formed steel after hot stamping has a strength of 1900 MPa-2200 MPa, and is welded using a high-strength steel laser welding filler according to claim 6.
